# EUROPEAN PATENT SPECIFICATION

(11) **EP 2 894 329 B1**
(45) Date of publication and mention of the grant of the patent: **27.07.2016**
(21) Application number: 13818792.7
(22) Date of filing: 30.08.2013
(51) Int. Cl.: F03D 15/00, F03B 13/00

(54) **ELECTRO POWERED MECHANICAL DEVICE FOR POWER GENERATION**
ELEKTROMAGNETISCH ANGETRIEBENE MECHANISCHE ENERGIEERZEUGUNGSVORRICHTUNG
DISPOSITIF MÉCANIQUE ÉLECTRO-MOTORISÉ DE GÉNÉRATION D'ÉNERGIE

(30) Priority: 03.09.2012 PT 2013106515
(43) Date of publication of application: 15.07.2015
(73) Proprietor: Barroso Tavares, Manuel, 2330-138 Entroncamento (PT)
(72) Inventor: Barroso Tavares, Manuel, 2330-138 Entroncamento (PT)
(74) Representative: Viegas Costa Paixão, Alexandra Maria
(86) International application number: PCT/IB2013/058162
(87) International publication number: WO 2014/033679

(56) References cited:
- WO-A1-2009/099137
- CN-Y- 201 221 441
- DE-B3-102009 033 205
- JP-A- S61 124 767
- US-A1- 2003 110 767

## Description

### Field of the Invention

The present invention relates to a device for the production of electricity driven by a conventional source of driving power generated by thermal power, hydraulic power, wind power, etc. or any other power source.

### Background of the Invention

There are currently several ways to produce clean, renewable energy, namely, various forms of driving the generators either of AC or DC. However, all these models involve very high production and maintenance costs.

Even though there are many published documents, such as WO 2009/099137 and DE 102009033205, describing devices for energy production, and the equipment described in the invention uses various mechanical parts that are common in the art, it has not been detected any document that describes an equipment with the same sequence of parts nor that uses the method described herein, for the production of energy.

### Advantages of the Invention

The main advantage of the invention is to provide a device easy to produce at a low cost, which can be installed in locations where the installation of conventional equipment for power production is not feasible.

It also has the advantage of being able to use as any source of electrical energy obtained from conventional sources (thermal, hydro, wind, solar, etc.), or any other power source.

### Brief Description of the Drawings

These and other features can be readily understood by reference to the accompanying drawings, which should be regarded solely as examples and do not in any way as restricting the scope of the invention.

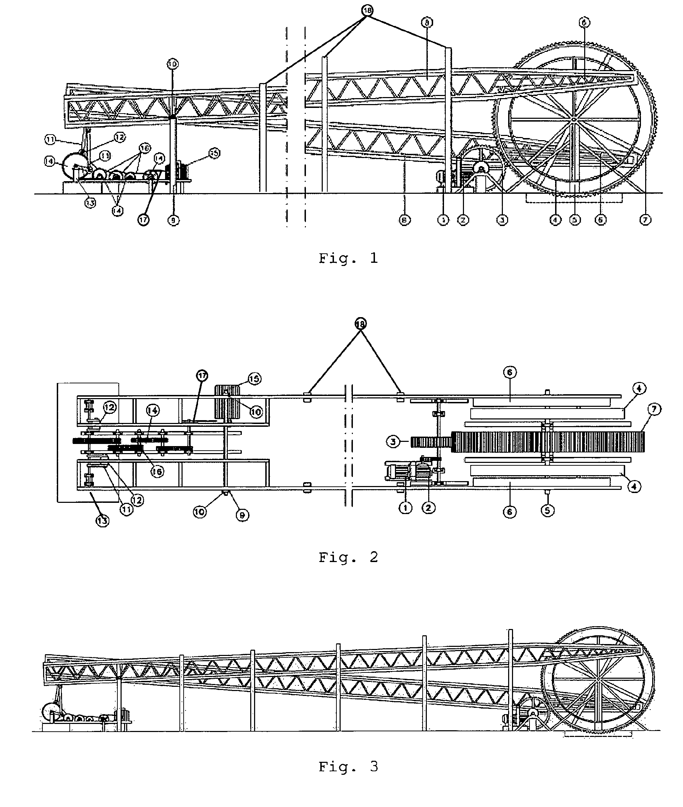

Figures 1 and 2 show, respectively, a side view and a top view of the device of the invention.

Are visible therein its various components: power source (1) reducer (2) ratchet wheel (3), wheels (4), support of the wheels (5), cursors (6), main wheel (7), levers (8), support of the levers (9), fulcrum of the levers (10), stays of the rods (11), rods (12), support of the rods (13), driven gear (14) generator (15), belt / chain (16), chain (17) and lever balancing device (18).

### Detailed Description of the Invention

The present invention relates to a device for the production of electrical energy in a cheap, clean and renewable manner.

The device comprises power source (1) reducer (2)ratchet wheel (3), wheels (4), support of the wheels (5), cursors (6), main wheel (7), levers (8), support of the levers (9), fulcrum of the levers (10),stays of the rods (11), rods (12), support of the rods (13), driven gear (14) generator (15), belt / chain (16), chain (17) and lever balancing device (18).

The lever balancing devices (18), that depend on the length of the levers may be more than one in number, are positioned along the levers (8) serving to support the same.

The combinations of driven wheel (14) and belt / chain (16), may be in a quantity greater than one, depending the quantity on the number of rotations that must be available in the generator.

The device is set in motion by the power source (1), which sets the reducer (2) in motion. This, after reducing the number of revolutions to a number that enables the operation of the remaining components of the apparatus through the ratchet wheel (3) drives the main wheel (7). The revolution of this main wheel (7) sets the wheels (4) in motion. The cursors (6) that are coupled to the wheels (4) set the levers (8) in motion. These components are supported by the supports of the wheels (5). The levers (8) which are attached to the supports (9) where the fulcrum of the lever (10) is located, when they transmit movement to the rods (12) which are supported by the supports of the rods (13) through the stays of the rods (11) set in motion the first set comprising the driven gear (14) and belt / chain (16) which, in turn, transmit movement to the others. The last chain (17) transmits motion to the pulley of the rotor of the generator (15) causing it to rotate, producing power.

## Claims

1. An electro powered mechanical energy generation device comprising:
a) a reducer (2) which, in use, is set in motion by the power supply (1);
b) a ratchet wheel (3) which, in use, is set in motion by the reducer (2);
c) a main wheel (7) which, in use, is set in motion by the ratchet wheel (3);
d) a plurality of wheels (4) each having a cursor (6) coupled thereto, which, in use, are set in motion by the main wheel (7);
e) a plurality of support for the levers (9) and levers (8) which, in use, are set in motion by the cursors (6);
f) rods (12) and support for the rods (13); and
g) a combination comprising: a first wheel set, which, in use, is set in motion by the levers (8), comprising a driven gear (14), a first belt/chain (16); and a second chain (17), whereby the second chain transmits motion to a pulley of a generator (15) for producing electrical current.

2. Electro powered mechanical energy generation device according to the preceding claim, **characterized in that** the power source (1) is fed by any conventional or unconventional power source.

3. Method for operating an electro powered mechanical energy generation device wherein:
a) a power supply (1) sets a reducer (2) in motion;
b) the reducer (2) after reducing the number of rotations, sets a ratchet wheel (3) in motion;
c) the ratchet wheel (3) transmits the motion to a main wheel (7);
d) the movement of the main wheel (7) is transmitted to the wheels (4);
e) cursors (6) are coupled to the wheels (4) that set levers (8) in motion;
f) rods (12), set in motion by the levers (8) through stays (11), drive a first wheel set comprising a driven gear (14) and a belt/chain (16), which in turn transmits movement to the following;
g) a last chain (17) transmits motion to a pulley of the rotor of the generator (15) causing it to rotate, producing electric current.

## Patentansprüche

1. Elektrisch angetriebene mechanische Energieerzeugungsvorrichtung, bestehend aus:
a) einem Getriebe (2), das im Betrieb durch eine Energiequelle (1) in Bewegung gesetzt wird;
b) einem Sperrrad (3), das im Betrieb durch das Getriebe (2) in Bewegung gesetzt wird;
c) einem Hauptrad (7), das im Betrieb durch das Sperrrad (3) in Bewegung gesetzt wird;
d) einer Vielzahl von Rädern (4), jedes mit einem daran angekoppelten Cursor (6) versehen, der im Betrieb durch das Hauptrad (7) in Bewegung gesetzt wird;
e) einer Vielzahl von Haltevorrichtungen für Hebel (9) und Hebel (8), die im Betrieb durch die Cursoren (6) in Bewegung gesetzt werden;
f) Schubstangen (12) und Haltevorrichtungen für die Schubstangen (13); und
g) einer Kombination bestehend aus: einem ersten Radsatz, der im Betrieb durch die Hebel (8) in Bewegung gesetzt wird, bestehend aus einem getriebenen Rad (14), einem ersten Riemen/Kette (16); und einer zweiten Kette (17), wobei die zweite Kette die Bewegung auf eine Riemenscheibe eines Generators (15) zur Erzeugung von elektrischer Energie überträgt.

2. Elektrisch angetriebene mechanische Energieerzeugungsvorrichtung nach Anspruch 1, **dadurch gekennzeichnet, dass** die Energiequelle (1) von einer konventionellen oder unkonventionellen Energiequelle gespeist wird.

3. Verfahren zum Betrieb einer elektrisch angetriebenen mechanischen Energieerzeugungsvorrichtung, bei dem:
a) eine Energiequelle (1) ein Getriebe (2) in Bewegung setzt;
b) das Getriebe (2) das Sperrrad (3) in Bewegung setzt, nachdem es die Anzahl der Umdrehungen reduziert hat;
c) das Sperrrad (3) die Bewegung auf ein Hauptrad (7) überträgt;
d) die Bewegung des Hauptrads (7) auf die Räder (4) übertragen wird;
e) Cursoren (6) an die Räder (4) gekoppelt sind und die Hebel (8) in Bewegung setzten;
f) Schubstangen (12), die durch die Hebel (8) über Zugstangen (11) in Bewegung gesetzt wurden, einen ersten Radsatz antreiben, bestehend aus einem getriebenen Rad (14) und einem Riemen/einer Kette (16), der/die die Bewegung wiederum auf die folgende überträgt;
g) eine letzte Kette (17) die Bewegung auf eine Riemenscheibe des Rotors eines Generators (15) überträgt, wodurch dieser sich in Bewegung setzt und elektrische Energie erzeugt.

## Revendications

1. Un dispositif électro alimenté de génération d'énergie mécanique, comprenant:
a) un réducteur (2) qui, en utilisation, est mis en mouvement par la source d'alimentation (1);
b) une roue à cliquet (3) qui, en utilisation, est mis en mouvement par le réducteur (2);
c) une roue principale (7) qui, en utilisation, est mis en mouvement par la roue à cliquet (3);
d) une pluralité de roues (4) ayant chacune un curseur (6) couplé à celle-ci, qui, en utilisation, sont mis en mouvement par la roue principale (7);
e) une pluralité de support pour les leviers (9) et les leviers (8) qui, en utilisation, sont mis en mouvement par les curseurs (6);
f) des tiges (12) et le support pour les tiges (13); et
g) une combinaison comprenant: un premier jeu de roues, qui, en utilisation, est mis en mouvement par les leviers (8), comprenant un engrenage entraîné (14), une première courroie/chaîne (16); et une seconde chaîne (17), dans laquel la deuxième chaîne transmet le mouvement à une poulie d'un générateur (15) pour produire un courant électrique.

2. Un dispositif électro alimenté de génération d'énergie mécanique alimenté selon la revendication précédente, **caractérisé en ce que** la source d'alimentation (1) est alimentée par une source d'énergie classique ou non classique.

3. Procédé pour faire fonctionner un dispositif électro alimenté de génération d'énergie mécanique, dans lequel:
a) une alimentation électrique (1) définit un réducteur (2) en mouvement;
b) le réducteur (2) après la réduction du nombre de rotations, définit transmet le mouvement à une roue à cliquet (3);
c) la roue à cliquet (3) transmet le mouvement à une roue principale (7);
d) le mouvement de la roue principale (7) est transmise aux roues (4);
e) des curseurs (6) sont couplés aux roues (4) qui définissent les leviers (8) en mouvement;
f) des tiges (12), mis en mouvement par les leviers (8) à travers des séjours (11), transmettent le mouvement à un premier jeu de roues comprenant un engrenage entraîné (14) et une courroie/chaîne (16), qui à son tour transmet le mouvement à la suivante;
g) la dernière chaîne (17) transmet le mouvement à une poulie du rotor du générateur (15) pour le faire tourner, en produisant un courant électrique.
